# EUROPEAN PATENT SPECIFICATION

(11) **EP 1 473 983 B1**
(45) Date of publication and mention of the grant of the patent: **23.03.2011**
(21) Application number: 03704784.2
(22) Date of filing: 13.02.2003
(51) Int. Cl.: A01B 33/16, A01B 77/00

(54) **ROTARY CULTIVATOR**
KREISELKULTIVATOR
CULTIVATEUR ROTATIF

(30) Priority: 13.02.2002 GB 0203374; 09.07.2002 GB 0215909
(43) Date of publication of application: 10.11.2004
(73) Proprietor: Gossop, John, Near Goole North Humberside DN14 8DW (GB)
(72) Inventor: Gossop, John, Near Goole North Humberside DN14 8DW (GB)
(74) Representative: Waddington, Richard
(86) International application number: PCT/GB2003/000639
(87) International publication number: WO 2003/067957

(56) References cited:
- FR-A- 2 204 101
- FR-A- 2 291 693
- FR-A- 2 588 488
- US-A- 1 276 843
- US-A- 4 345 531
- US-A- 4 458 763

## Description

The present invention relates to rotary cultivators for the preparation of agricultural land, beaches and stone/ earth roadway and tracks (eg. see FR-A-2204101).

Rotary cultivators used in agriculture are usually pulled by a tractor with the rotor driven from the tractor power take-off shaft. They usually consist of a frame holding a rotatable shaft. The shaft has tines or spikes fitted at intervals around it, which cut into and break up the soil into smaller particles suitable for sowing with crop seeds. They can be used on land already loosened or directly on land after the pervious crop has been harvested. One drawback with rotary cultivators is that on most soil types they prepare a seedbed with a surface that consists of a mixture of small and large soil particles plus (if the soil is stony) stones. This is not ideal for germination of the seeds nor for easy harvesting of the subsequent crop.

Often an adjustable hood or shield is fitted behind the rotor. When adjusted down to the soil surface this hood produces a more finely broken soil, firstly by the shattering effect as the clods hit the hood, and secondly the hood draws some soil ahead of it, forcing it back into the rotor for re-circulation. Sometimes a hood consisting of steel bars with gaps in-between is used to allow small particles through and hold large particles back. However, this clogs in wet conditions, is difficult to adjust and can only cope with relatively small volumes of soil, therefore needing a slow forward speed.

Specific embodiments of the present invention aim to provide a rotary cultivation machine that removes large clods and stones from the upper layer of the soil and/or produce a seed bed with few clods or stones larger than a required size and/or works at faster forward speeds than conventional machines.

According to a first aspect of the present invention, there is provided a rotary cultivator comprising soil disruption means for disrupting a layer of soil and soil grading means for separating the soil into differing particle sizes, as claimed.

The soil disruption means excavates a hole or cavity in a ground surface. The soil grading means is inclined such that soil particles greater than a predetermined size fall into the cavity. The soil grading means may be inclined such that the majority of large particles are moved away from the cavity.

Preferably, the soil disruption means and preferably, the soil grading means are mounted on a frame, which is movable over the ground surface. Preferably, the grading means is downstream of the soil disruption means. Preferably, the soil disruption means is adapted to provide the soil grading means with a supply of soil preferably, of different particle sizes.

Preferably, the soil disruption means comprises a rotary shaft and a plurality of soil engaging members extending radially therefrom. The rotary shaft may rotate either in a clockwise or anti-clockwise direction. Advantageously, a clockwise rotation of the shaft allows the disrupted material to be thrown higher up the soil grading means thereby improving separation.

Preferably, cover means extends partially around the rotary shaft, said cover means adapted to maintain the soil in the vicinity of the soil engaging members. The cover means may extend substantially around a front section of the soil disruption means preferably, when the rotary shaft rotates in a clockwise direction.

Advantageously, the cover means ensures the soil is adequately broken up before being thrown onto the soil grading means.

Preferably, the soil disruption means comprises aiming means adapted to aim soil disrupted by the soil engaging members onto the soil grading means. Preferably, the aiming means comprises a shield attached to the cover means by a hinge. Preferably, the aiming means is adjustable about the hinge.

Alternatively, or additionally, the aiming means may comprise a plate attached to the rear of the cultivator, preferably a side panel thereof. Preferably, the aiming means is attached to the side panel by at least one adjustable bracket, preferably a bracket at either end thereof. Preferably, the plate extends substantially across the width of the cultivator. The plate may comprise a plurality of tines attached thereto, preferably extending downwardly therefrom.

The angle of the plate may be varied. The plate may be inclined at an angle in the range of about 0.1° to 90°, with respect to a horizontal plane, i.e. with reference to the direction of the gravitational force of the earth. The plate may be inclined at an angle in the range of about 1° to 89°, more preferably, about 25°to 75° and most preferably, about 40° to 60°, with respect to a horizontal plane, i.e. with reference to the direction of the gravitational force of the earth. Preferably, the plate is angled towards the soil grading means.

Advantageously, and preferably, in addition to aiming soil onto the soil grading means, the aiming means is adapted to pull loose soil and clods back into the soil disruption means thereby leaving a clear cavity for larger particles to fall into.

Preferably, the soil grading means is inclined at an angle in the range of 0.1°-90°, with respect to a horizontal plane, i.e. with reference to the direction of the gravitational force of the earth. The soil grading means may be set at 90°, for example, when burying stones on sandy land. Preferably, the soil grading means is inclined at an angle in the range of 1°-89°, more preferably, 25°-75° and most preferably, 40°-60°, with respect to a horizontal plane, i.e. with reference to the direction of the gravitational force of the earth. The soil grading means is angled towards the soil disruption means.

Advantageously mounting the soil grading means at an angle ensures that larger soil particles, which do not fall through the soil grading means, are returned to the cavity and covered by smaller particles.

Preferably, the angle of inclination of the soil grading means is adjustable. Preferably, the angle of inclination is dependent on the size and therefore weight of the soil particles to be graded by the soil grading means. For clarity, soil includes clods, dirt and stones etc.

Preferably, the soil grading means comprises a web or grader. Preferably, the soil grading means comprises a plurality of bars supported by webbing material. Preferably, the soil grading means comprises a plurality of bars supported by at least two flexible strips of webbing material. Preferably, soil may fall through gaps in between the bars. The width of gaps between the bars may be adjustable so that particle sizes, which may fit therethrough, may be varied.

Alternatively, or additionally, the soil grading means may comprise a plurality of interchangeable webs, wherein each web preferably comprises bars at substantially fixed positions such that the appropriate web may be used depending on the particle size to be graded.

Preferably, the webbing material is mounted over at least two shafts preferably, an upper shaft and a lower shaft. The webbing material may be mounted on a further shaft adapted to maintain tension in the webbing material. Preferably, at least one of the shafts is rotatable such that the soil is conveyed upwards and preferably, towards the rear of the rotary cultivator. Preferably, the rotating shaft is driven by a power-take from a drive vehicle.

Preferably, the soil grading means is adapted to rotate at variable speeds. The soil grading means may comprise control means adapted to vary the speed of the soil grading means. For example, for a given gap between the bars of the web, varying the speed of the web results in different sizes of soil particles being separated. For example, a fast speed creates an almost impenetrable wall, while a slower speed allows more soil to pass through the gaps between the bars. Advantageously, varying the speed of the soil grading means depending on the type of soil separation requirement is far better than having to stop the machine to put on a different web on for every different requirement, i.e. when soil conditions change or a different form of cultivation is required.

Preferably, the soil grading means comprises shaking means adapted to shake the soil particles through the gaps in between the bars. Preferably, the shaking means comprises at least one agitator. The smaller soil particles may fall through the soil grading means on to cultivated soil surface.

Preferably, the rotary cultivator comprises soil re-circulation means adapted to prevent particles greater than a pre-determined size from reaching the top of the soil grading means. Preferably, the soil re-circulation means comprises at least one scrubber adapted to urge larger soil particles back down the soil grading means to the soil disruption means where the larger particles are broken into smaller particles. Some of the large soil particles may fall into the cavity excavated by the soil disruption means. Some of the large soil particles may be returned to the soil disruption means.

Preferably, the soil grading means is adjustable in terms of its position in relation to the soil disruption means. The distance of the soil grading means from the soil disruption means may be adjustable.

Advantageously, this allows an operator to determine the size and proportion of larger soil particles, which may be graded by the grading means.

Preferably, the soil grading means is adjustable in terms of its position in relation to the ground. The distance of the soil grading means, preferably the lower shaft thereof, from the ground, may be adjustable.

Advantageously, this allows an operator to determine the size and proportion of larger soil particles, which may fall directly onto the cavity.

The rotary cultivator may comprise seed planting apparatus for planting crop seeds onto the cultivated soil.

The rotary cultivator may comprise conveying means adapted to transfer particles at the top of the soil grading means laterally away to the side of the rotary cultivator. Preferably, the conveying means comprises a conveyer belt arranged in use so that soil and stones are transferred substantially away from the cultivated land on which crops may grow. Preferably, and advantageously, the conveying means transfers the soil and stones etc into tractor wheeling cavities where crops do not grow.

The rotary cultivator may comprise means to provide binding agent to the cultivated soil, for example, cement. The rotary cultivator may comprise rolling means for consolidating the cultivated soil or ground.

The rotary cultivator, in a first embodiment, may be used to bury larger soil particles and stones etc underneath a layer of smaller soil particles, preferably where seeds, for example, cereals would be planted. In the first embodiment, the position of the soil grading means is adjusted so that a gap is left between the ground surface and the soil grading means, and a gap is left between the soil disruption means and the soil grading means. In the first embodiment, larger soil particles and stones roll down the soil grading means and through the gap between the grading means and the ground surface and into the cavity. Smaller soil particles pass through the soil grading means and onto the larger soil particles. The gap between the soil disruption means and the soil grading means results in fewer larger soil particles from being ground down further by the soil disruption means.

The rotary cultivator may be used to cultivate land for crops such as potatoes, where a deep seed bed (cavity) with only a few large soil particles is required. The position of the soil grading means is adjusted so that it is close to the ground and to the soil disruption means. Hence, the soil is returned back to the soil disruption means where larger soil particles are ground down further. Also, large particles are able to fit through the small gap between the ground and the soil grading means. In addition, large soil particles may be removed from the cultivation area by the conveying means.

Disadvantageously, positioning the soil grading means very close the soil disruption means, results in larger soil particles rolling down the soil grading means, partially restricting the ability of the soil disruption means to throw further soil particles on to the grading means.

Disadvantageously, prior art cultivators cannot be adjusted so that larger clods of soil are returned back to the soil disruption means for further breaking up. Hence, such prior art cultivators are unable to make a seedbed consisting only of particles which are sufficiently small to pass through the gaps between the web bars throughout the cultivated depth.

Advantageously, and preferably, the soil disruption means is adapted to at least partially break up the soil before it hits the soil grading means, thereby providing improved separation of small and larger soil particles, and additionally, a faster work rate.

Preferably, the grading means comprises a plate or share at the lower end thereof. Preferably, the angle of the plate is adjustable and operable to direct such particles either on to the grading means or push them forward into the soil disruption means. The position of the plate allows the soil grading means to be adjusted further away from the disruption means and preferably slightly further above the cavity.

The plate may or may not be used with the conveying means but is, preferably removed when the first embodiment of the cultivator is used, i.e. when larger soil particles need to be buried under smaller ones. Preferably, when the cultivator is used on substantially stone free soil, the plate may be removed. Preferably, the re-circulation means is fitted to the cultivator to prevent particles greater than a pre-determined size from reaching the top of the soil grading means.

According to a second aspect of the present invention there is provided a method of cultivating ground comprising use of a rotary cultivator defined by the first aspect.

All of the features described herein may be combined with any of the above aspects, in any combination.

For a better understanding of the invention, and to show how embodiments of the same may be carried into effect, reference will now be made, by way of example, to the accompanying diagrammatic drawings, in which:-
Figure 1 is a schematic side view of a first embodiment of rotary cultivator;
Figure 2 is a schematic side view of a second embodiment of rotary cultivator not according to the invention;
Figure 3 is a schematic side view of a third embodiment of rotary cultivator;
Figure 4 is a schematic side view of a fourth embodiment of rotary cultivator;
Figure 5 is a schematic rear side view of the fourth embodiment of rotary cultivator shown in Figure 4; and
Figure 6 is a schematic view of a fifth embodiment of rotary cultivator.

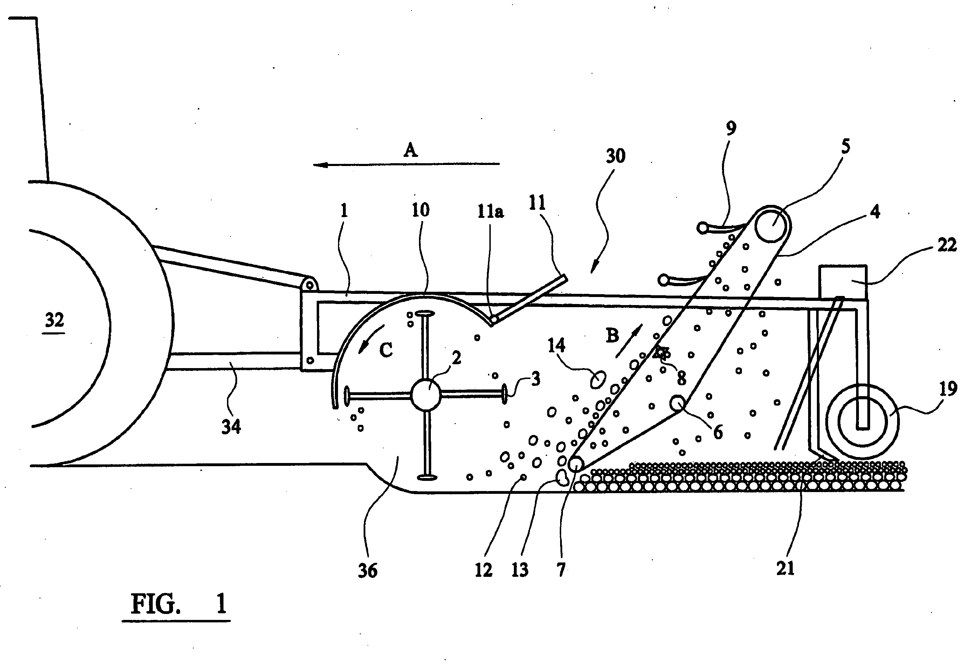

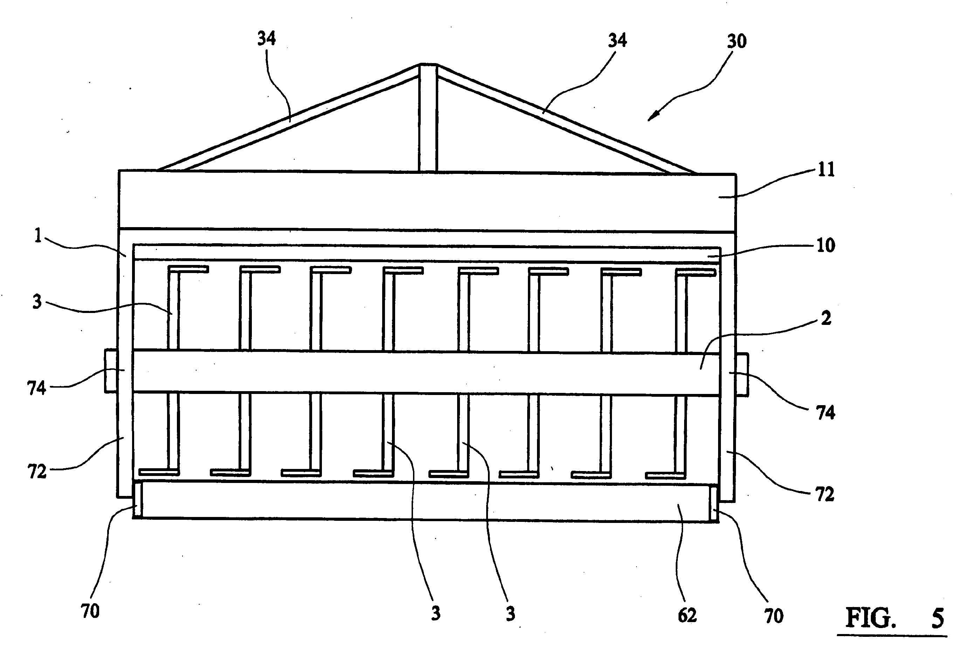

Referring to Figure 1, a rotary cultivator 30 machine is shown comprising a wheeled frame 1, in which a horizontally disposed shaft 2 is rotatably mounted. Figure 5 shows the shaft 2 being rotatably mounted with bearings 74 into side panels 72 of the wheeled frame 1. The cultivator 30 is towed by a conventional tractor 32 unit and powered from a power-take-off shaft 34 or hydraulic system of the tractor 32. The shaft 2 is provided with a plurality of soil-working members 3 that are spaced apart form one another both along the length of the shaft 2 and around the longitudinal axis of that shaft 2.

Also mounted on the frame 1 is a sifting means 4, which comprises a multiplicity of steel bars (not shown) fastened to strips of flexible material (not shown). The sifting means 4 travels in an upwardly direction and towards the rear of the machine 30 as shown by arrow B around revolving rollers 5, 6 and 7 of which at least one is driven.

The sifting means 4 has agitators 8 to shake it and breaking means or scrubbers 9. Above the shaft 2 there is provided an extendable cover 10 and an adjustable shield 11 at attached to the cover 10 by a hinge 11a. The sifting means 4 is adjustable in terms of its speed of travel over the rollers 5, 6 and 7, its angle of inclination with respect to the ground surface, and in terms of its position in relation to shaft 2. It can also be adjusted such that the gaps in between the steel bars are either wider or narrower.

As the machine moves forward in the direction of arrow A, the rotor 2 revolves in the direction of arrow C. The soil-working members 3 cut into the soil forming a cavity 36, thereby breaking it into a mixture of small particles 12, large particles 13 and stones 14. This mixture is thrown by the soil-working members 3 on to the sifting means 4, which moves in the direction of arrow B. Because larger particles 13 and stones 14 roll easily, they roll down the face of sifting means 4 into the cavity 36 excavated by the soil-working members 3. Some large soil particles 13 fall back on to the soil-working members 3 and are re-circulated around the shaft 2, and are broken up even further. Other large particles 13 that have not rolled back, carry on up the sifting means 4 until they reach scrubbers 9 which either break the large particles 13 into smaller particles, or force them to roll down the face of the sifting means 4 back where they are recirculated by the soil-working members 3.

The small soil particles 12 pass through the gaps on the sifting means 4 aided by the shaking action of the agitators 8, and fall on to the cavity 36 on top of the larger soil particles 13 and stones 14.

A seeder unit 22, levelling means 21, packer roller 19 or other extra units (not shown) can be attached to the frame 1 in order to carry out a complete job in one pass. Beaches can be improved by laying the stones below the sand and producing a level surface.

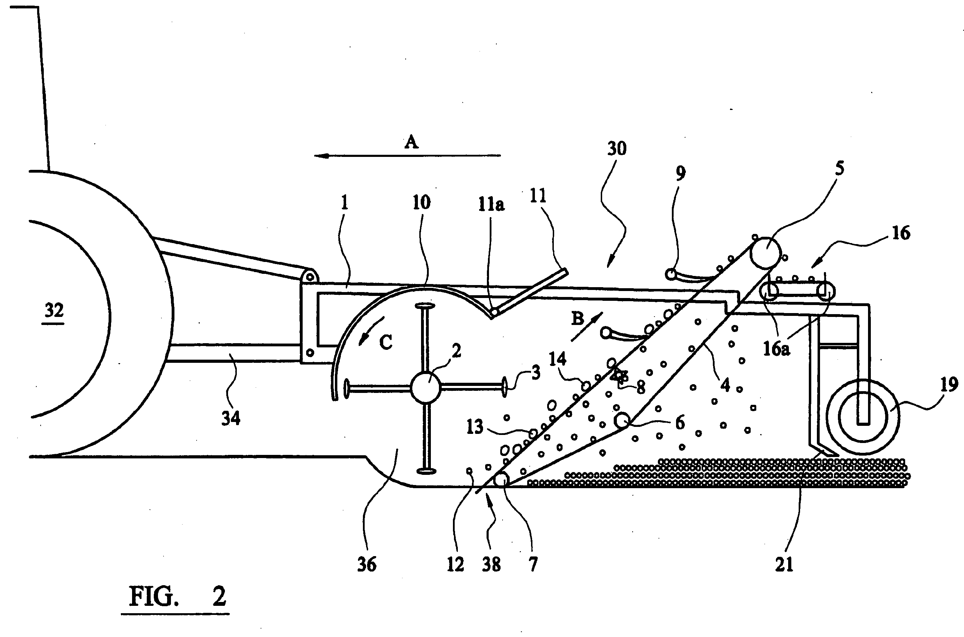

Referring to Figure 2, there is shown a second embodiment of the cultivator 30 towed by a conventional tractor unit 32.

In some crops, for example, potatoes and carrots, in order that the crop grows to a good shape, and to aid harvesting, it is preferable that no clods or stones remain in the part of the field between each set of tractor wheelings, where the crop is grown. Figure 2 shows a machine substantially similar to that shown in Figure 1 and the same reference numbers are used to describe like parts.

In the second embodiment shown in Figure 2, a share or removable plate 38 is provided at the lower end of the sifting means 4 which either directs soil particles 14 onto the sifting means 4 or back into the soil working members 3 where they are ground down further. In addition, there is a cross conveyor 16 consisting of a rubber conveyer belt 16b supported by rollers 16a. The sifting means 4 is shown having been adjusted so that the bottom roller 7 is almost touching the bottom of the cavity 36 excavated by the soil-working members 3. The small soil particles 12, large soil particles 13 and stones 14 are all thrown onto the sifting means 4. The small soil particles 12 pass through the gaps in the soil sifting means 4 and fall to the bottom of the cavity 36.

Large soil particles 13 and stones 14 pass upwards and rearwards in the direction of arrow B. Some are shaken through by agitator 8 and some are recirculated by the scrubbers 9 back down to the rotating shaft 2 and soil-working members where most of the large particles 13 are broken down into particles small enough to pass through the gaps of the sifting means 4. They fall to the cavity 36 on top of the small particles 12 that have previously passed through. Any large soil particles 13 or stones 14 that have failed to pass through the gaps in the sifting means 4 and which have not been recirculated, pass on to the cross conveyor 16 to be conveyed across the width of the machine and fall into tractor wheeling cavities (not shown) where the crop does not grow. A levelling means 21 levels the surface and a roller 19 consolidates the surface and helps support the machine or support wheels (not shown) run in the tractor wheelings.

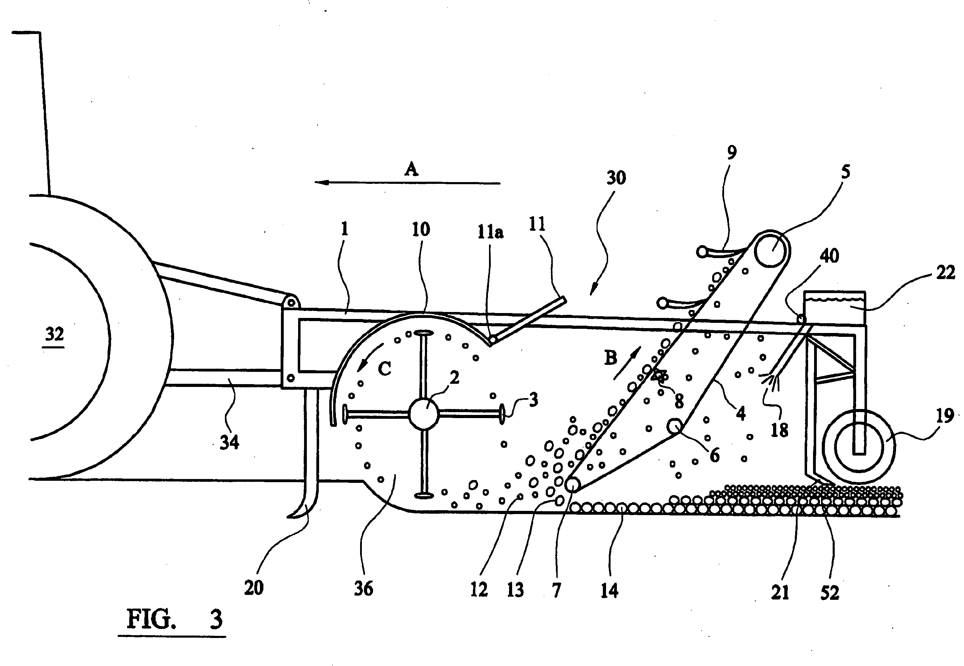

Referring to Figure 3, there is shown a third embodiment of the cultivator 30 towed by a conventional tractor unit 32.

There are many thousands of miles of farm tracks and minor roads in undeveloped countries that are simply made from soil or stones, with the large particles on the bottom for strength and the smaller particles on top for smoothness. They quickly become rutted and potholed, and so need renewal. The third embodiment of the cultivator 30 is aimed to construct new track from existing material or to re-structure and improve an existing track. Figure 3 shows a machine substantially similar to that shown in Figure 1. The same reference numbers are used to describe the parts.

In the third embodiment, there are a series of ripper tines 20 arranged across the front of the machine 30 to loosen the existing track or surface material before the soil-working members 3 throw the small particles 12, large particles 13 and stones 14 onto the sifting means 4. The large particles 13 and stones 14 roll down the surface of the sifting means 4 into the cavity 36 excavated by the soil-working members 3. The small particles 12 pass through the gaps on the sifting means 4, either directly or with help from agitators 8 and the soil breaking means or scrubbers 9.

Mounted at the rear of the frame 1 is a tank 17 containing binding agent 50, a pump 40, a sprayer 18 and a roller 19. The pump 40 pumps the binding agent 50 to the sprayer means 18 which then sprays the binding agent 21 on to the small particles 12 as they fall onto the cavity 36 on top of the large particles 13 and stones 14. A levelling bar 52 levels the surface and the roller 19 consolidates the surface as well as helping to support the machine.

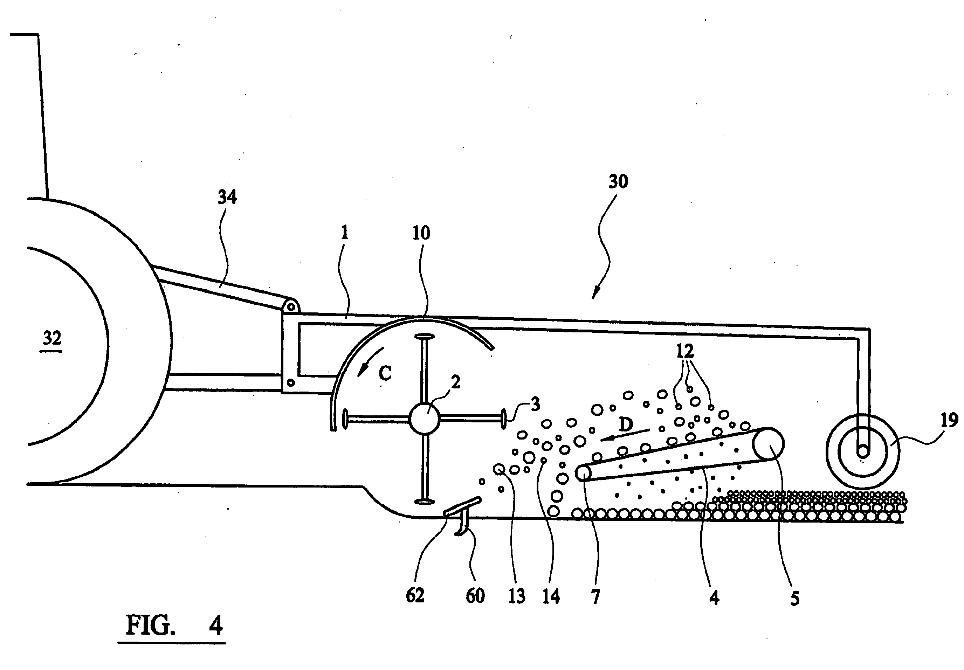

Referring to Figure 4, there is shown a fourth embodiment of the cultivator 30 towed by a conventional tractor unit 32.

In the fourth embodiment, the cultivator 38 is shown having a steel plate 62 located close to the bottom of the shaft 2 and soil working member 3. The steel plate 62 extends across the entire width of the cultivator 30 and is aimed upwardly away from the ground such that large particles 13, stones 14 and small particles 12 are all thrown onto the sifting means 4 thereby reducing the amount of particles 12,13,14 thrown thereunder. The position of the plate 62 makes it a suitable mounting point for short tines 60, which break up any hardpan, caused by the action of the rotating shaft 2 and soil working members 3. The plate 60 is adjustable for position with respect to the soil working members 3 and angle.

In some conditions, for example, where it is required to bury materials that do not roll easily such as clumps of stubble, turf pieces and weeds etc, below the soil, it is better to reverse the direction of travel of the sifting means as indicated by arrow D and to be able to lower the sifting means 4 such that it is horizontal, or nearly horizontal, with respect to the ground, as shown in figure 4. It should be appreciated that the angle and position of the sifting means 4, and the direction of travel, i.e. either in the direction of arrow B or D may be varied.

Referring to Figure 5, there is shown a rear view of the fourth embodiment of the cultivator 30 shown in Figure 4. The steel plate 62 is shown attached by adjustable brackets 70, to two side panels 72 of the frame 1.

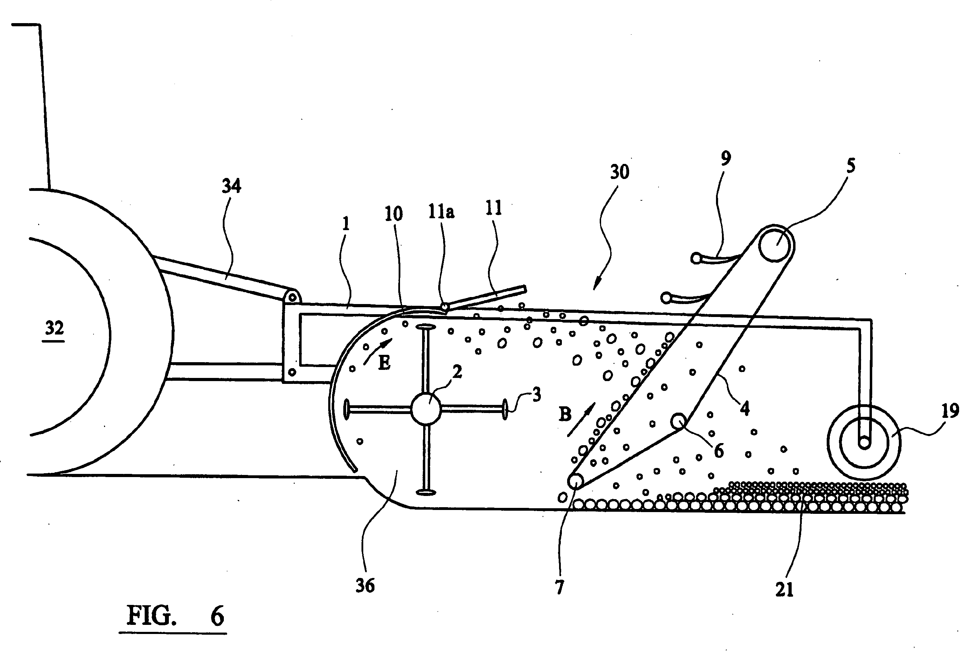

Referring to Figure 6, there is shown a fifth embodiment of the cultivator 30, towed by conventional tractor unit 32.

In figure 6, the rotatable shaft 2 and soil working members 3 are shown rotating in the opposite direction to normal, ie. in the direction of arrow E shown in figure 5 instead of the direction of arrow C as shown in the other figures. In addition, the extendable cover 10 extends further downwards at the front of the cultivator 30 but not so far at the top of the cultivator 30. The adjustable shield 11 attached to the cover 10 by hinge 11a is arranged to allow the discharge of the material to a much higher level therefore striking the sifting means 4 for the top thereof, thereby allowing far improved separation. This is particularly useful when conditions dictate that the material is not easily separated otherwise.

Advantages of the rotary cultivator 30 reside in the effect manner in which the soils surface can be cultivated. The sifting means 4 is provided at an angle, which is adjustable so that larger particles, which do not pass through therethrough, are urged back to be recycled by the soil-working members. The scrubbers 9 also prevent particles, which are too large from bypassing the sifting means. Finally, the conveyer 16 transports larger stones which have bypassed the sifting means away from the cultivated soil patch where crops may be grown and into the tractor wheelings.

## Claims

1. A rotary cultivator comprising soil disruption means (2, 3) for disrupting a layer of soil, and movable soil grading means (4) to separate the soil into differing particle sizes, wherein the soil grading means (4) is inclined, and movable up in the inclined direction or down in the inclined direction, and a gap is left between the soil disruption means (2, 3) and the soil grading means (4) such that, in use, soil particles greater than a predetermined size are returned to a cavity excavated by the soil disruption means.

2. A rotary cultivator as claimed in claim 1, wherein the angle of inclination of the soil grading means (4) is adjustable.

3. A rotary cultivator as claimed in either claim 1 or claim 2, wherein the soil grading means (4) comprises a plurality of bars supported by webbing material.

4. A rotary cultivator as claimed in claim 3, wherein the width of gaps between the bars is adjustable so that particle sizes, which may fit therethrough, can be varied.

5. A rotary cultivator as claimed in any preceding claim, wherein the soil grading means (4) is adapted to rotate at variable speeds.

6. A rotary cultivator as claimed in any of claims 3 to 5, wherein the soil grading means (4) comprises shaking means adapted to shake the soil particles through the gaps in between the bars.

7. A rotary cultivator as claimed in any preceding claim, wherein the rotary cultivator comprises conveying means (16) adapted to transfer particles at the top of the soil grading means (4) laterally away to the side of the rotary cultivator.

8. A rotary cultivator as claimed in any preceding claim, wherein the rotary cultivator comprises means (17, 18) to provide binding agent to the cultivated soil.

9. A rotary cultivator as claimed in any preceding claim, wherein the position of the soil grading means is adjusted so that a gap is left between the ground surface and the soil grading means (4).

10. A method of cultivating ground comprising use of a rotary cultivator defined by any of claims 1 to 9.

## Patentansprüche

1. Drehkultivator, umfassend eine Erdreich-Aufbrecheinrichtung (2,3) zum Aufbrechen einer Lage von Erdreich, und eine bewegliche Erdreich-Sortiereinrichtung (4) zum Trennen des Erdreichs in unterschiedliche Partikelgrößen, wobei die Erdreich-Sortiereinrichtung (4) geneigt und in der geneigten Richtung aufwärts bewegbar oder in der geneigten Richtung abwärts bewegbar ist, und eine Lücke zwischen der Erdreich-Aufbrecheinrichtung (2,3) und der Erdreich-Sortiereinrichtung (4) verbleibt, derart, dass im Gebrauch Erdreichpartikel, die größer sind als eine vorbestimmte Größe, in einen Hohlraum zurückgeführt werden, der durch die Erdreich-Aufbrecheinrichtung (2,3) ausgehoben ist.

2. Drehkultivator nach Anspruch 1, wobei der Neigungswinkel der Erdreich-Sortiereinrichtung (4) einstellbar ist.

3. Drehkultivator nach Anspruch 1 oder 2, wobei die Erdreich-Sortiereinrichtung (4) eine Mehrzahl von Stangen umfasst, die von Gewebematerial getragen werden.

4. Drehkultivator nach Anspruch 3, wobei die Breite von Lücken zwischen den Stangen einstellbar ist, derart, dass Partikelgrößen, die hindurchpassen, variiert werden können.

5. Drehkultivator nach einem der vorhergehenden Ansprüche, wobei die Erdreich-Sortiereinrichtung (4) dazu ausgelegt ist, sich mit variablen Geschwindigkeiten zu drehen.

6. Drehkultivator nach einem der Ansprüche 3 bis 5, wobei die Erdreich-Sortiereinrichtung (4) eine Schütteleinrichtung umfasst, die dazu ausgelegt ist, die Erdreich-Partikel durch die Lücken zwischen den Stangen zu schütteln.

7. Drehkultivator nach einem der vorhergehenden Ansprüche, wobei der Drehkultivator eine Fördereinrichtung (16) umfasst, die dazu ausgelegt ist, Partikel an der Spitze der Erdreich-Sortiereinrichtung (4) seitlich weg zur Seite des Drehkultivators zu transferieren.

8. Drehkultivator nach einem der vorhergehenden Ansprüche, wobei der Drehkultivator eine Einrichtung (17, 18) zur Bereitstellung eines Bindemittels für das kultivierte Erdreich umfasst.

9. Drehkultivator nach einem der vorhergehenden Ansprüche, wobei die Position der Erdreich-Sortiereinrichtung (4) derart eingestellt ist, dass eine Lücke zwischen der Bodenoberfläche und der Erdreich-Sortiereinrichtung (4) verbleibt.

10. Verfahren zum Kultivieren von Boden, umfassend die Verwendung eines Drehkultivators, der durch einen der Ansprüche 1 bis 9 definiert ist.

## Revendications

1. Dispositif cultivateur rotatif comprenant des moyens de cassage du sol (2, 3) pour casser une couche de terre et des moyens de criblage de terre mobiles (4) pour séparer la terre en différentes granulométries, dans lequel des moyens de criblage de terre (4) sont inclinés, et peuvent se déplacer vers le haut dans la direction inclinée ou vers le bas dans la direction inclinée, et un espace libre est laissé entre les moyens de cassage de terre (2, 3) et les moyens de criblage de terre (4), de telle sorte que dans l'utilisation, les particules de terre supérieures à une taille prédéterminée sont renvoyées à une cavité creusée par les moyens de cassage de terre (2, 3).

2. Dispositif cultivateur rotatif tel que revendiqué dans la revendication 1, dans lequel l'angle d'inclinaison des moyens de cassage de terre (4) est ajustable.

3. Dispositif cultivateur rotatif tel que revendiqué dans l'une ou l'autre des revendications 1 ou 2, dans lequel les moyens de cassage de terre (4) comprennent une pluralité de barres supportées par un matériau de sangles.

4. Dispositif cultivateur rotatif tel que revendiqué dans la revendication 3, dans lequel la largeur des espaces libres entre les barres est ajustable, de telle sorte que les granulométries qui peuvent s'adapter entre celles-ci pourront être variables.

5. Dispositif cultivateur rotatif tel que revendiqué dans l'une quelconque des revendications précédentes, dans lequel les moyens de criblage de terre (4) sont aptes à tourner à des vitesses variables.

6. Dispositif cultivateur rotatif tel que revendiqué dans l'une quelconque des revendications 3 à 5, dans lequel les moyens de criblage de terre (4) comprennent des moyens de vibrations aptes à faire vibrer les particules de terre à travers les espaces libres et entre les barres.

7. Dispositif cultivateur rotatif selon l'une quelconque des revendications précédentes, dans lequel le cultivateur rotatif comprend des moyens d'acheminement (16) aptes à transférer les particules au-dessus des moyens de criblage de terre (4) latéralement en éloignement du côté du dispositif cultivateur rotatif.

8. Dispositif cultivateur rotatif tel que revendiqué dans l'une quelconque des revendications précédentes, dans lequel le dispositif cultivateur rotatif comprend des moyens (17, 18) pour fournir un agent de liaison à la terre cultivée.

9. Dispositif cultivateur rotatif tel que revendiqué dans l'une quelconque des revendications précédentes, dans lequel la position des moyens de criblage de terre (4) est ajustée de telle sorte qu'un espace libre est laissé entre la surface broyée et les moyens de criblage de terre (4).

10. Procédé pour cultiver le sol comprenant l'utilisation d'un dispositif cultivateur rotatif défini par l'une quelconque des revendications 1 à 9.
